# EUROPÄISCHE PATENTSCHRIFT

(11) **EP 3 513 640 B1**
(45) Veröffentlichungstag und Bekanntmachung des Hinweises auf die Patenterteilung: **30.03.2022**
(21) Anmeldenummer: 19152299.4
(22) Anmeldetag: 17.01.2019
(51) Int. Cl.: A01B 59/041, A01B 61/02, A01B 63/111

(54) **VERFAHREN ZUR TILGUNG EINES FAHRTBEDINGTEN SCHWINGUNGSEINTRAGS**
METHOD FOR DAMPING TRAVEL-INDUCED OSCILLATION
PROCÉDÉ D'AMORTISSEMENT D'UNE ENTRÉE DE VIBRATIONS CINÉTIQUE

(30) Priorität: 19.01.2018 DE 102018200888
(43) Veröffentlichungstag der Anmeldung: 24.07.2019
(73) Patentinhaber: Deere & Company, Moline, IL 61265 (US)
(72) Erfinder: Gresch, Valentin, 68163 Mannheim (DE); Kremmer, Martin, 68163 Mannheim (DE); Reinmuth, Florian, 68163 Mannheim (DE)
(74) Vertreter: Dehnhardt, Florian Christopher

(56) Entgegenhaltungen:
- EP-A1- 3 357 333
- DE-A1- 19 737 318
- DE-U1- 29 521 611
- US-B1- 6 283 488

## Beschreibung

Die Erfindung betrifft ein Verfahren zur Tilgung eines fahrtbedingten Schwingungseintrags seitens eines Anbaugeräts, das an einem Dreipunkt-Kraftheber eines landwirtschaftlichen Traktors angebracht ist.

Ein derartiges Verfahren ist aus der DE 39 42 057 A1 bekannt und dient dort der dynamischen Stabilisierung einer landwirtschaftlichen Zugmaschine um eine horizontal verlaufende Querachse. Hierzu wird ein über einen Dreipunkt-Kraftheber an der Zugmaschine angelenktes Anbaugerät als Tilgermasse genutzt und mittels eines hydraulischen Hubwerks derart bewegt, dass fahrtbedingte Nickschwingungen der Zugmaschine zumindest teilweise kompensiert werden. Aufgrund der Trägheit des hydraulischen Hubwerks liegen die solchermaßen aktiv dämpfbaren Nickschwingungen im Bereich von Frequenzen einiger weniger Hertz. Höherfrequente Schwingungen wie auch solche um von der horizontalen Querachse abweichende Bewegungsachsen werden hingegen nicht erfasst . Die Schriften DE 197 37 318 A1, US 6 283 488 B1 und DE 295 21 611 U1 beschreiben weitere bekannte Verfahren.

Es ist daher Aufgabe der vorliegenden Erfindung, ein bezüglich seines Gebrauchsnutzens verbessertes Verfahren der eingangs genannten Art anzugeben.

Diese Aufgabe wird durch ein Verfahren mit den Merkmalen des Patentanspruchs 1 gelöst.

Das Verfahren macht sich hierbei den Umstand zunutze, dass sich die Unterlenker des Dreipunkt-Krafthebers vertikal zum Heben und Senken des Anbaugeräts sowie eingeschränkt auch horizontal und damit seitwärts verschwenken lassen, was durch Kugelgelenke im Bereich zugehöriger Anlenkstellen am Differentialgehäuse des landwirtschaftlichen Traktors ermöglicht wird. Eine derartige Seitenbeweglichkeit ist beispielsweise beim Pflügen gewünscht. Der neben den Unterlenkern ebenfalls am Anbaugerät eingehängte Oberlenker folgt dabei den vorgenannten Schwenkbewegungen.

Im Gegensatz zu Verfahren, die auf einer aktiven Schwingungstilgung durch Aufschaltung gegenphasiger Ausgleichsbewegungen mittels des hydraulischen Hubwerks des Dreipunkt-Krafthebers beruhen, kann hier jedem der beiden Freiheitsgrade der Unterlenker mittels der zugehörigen ersten und/oder zweiten Stellanordnung eine eigene Dämpfungscharakteristik in Form einer zugehörigen Dämpfungskraft aufgeprägt werden, was letztlich eine mehrachsige Tilgung der seitens des Anbaugeräts auf den landwirtschaftlichen Traktor übertragenen Schwingungen möglich macht. Eine derartige Dämpfungskraftanpassung erlaubt ihrem Prinzip nach auch eine Unterdrückung höherfrequenter Schwingungen oder eine gezielte Einschränkung bzw. Begrenzung des zur Verfügung stehenden Bewegungsfreiraums.

Definitionsgemäß bezieht sich eine Nickbewegung auf eine Drehung um eine Querachse, eine Roll- bzw. Wankbewegung auf eine Drehung um eine Längsachse und eine Gierbewegung auf eine Drehung um eine Hochachse des landwirtschaftlichen Traktors. Die Achsen verlaufen hierbei durch den sich aus der Kombination von landwirtschaftlichem Traktor und Anbaugerät ergebenden Gesamtschwerpunkt.

Weitere vorteilhafte Ausgestaltungen des erfindungsgemäßen Verfahrens gehen aus den Unteransprüchen hervor.

Vorzugsweise wird der Horizontal- und/oder Vertikalfreiheitsgrad durch Veränderung der Dämpfungscharakteristik der ersten und/oder zweiten Stellanordnung nur dann angepasst, wenn festgestellt wird, dass sich das Anbaugerät in einer angehobenen Transportstellung befindet. Dies trägt dem Umstand Rechnung, dass ein Eingriff ins Bewegungsverhalten der Unterlenker gerade bei Verwendung bodeneingreifender Anbaugeräte zu möglichen Beeinträchtigungen der Bodenbearbeitungsqualität führen kann.

Des Weiteren ist es denkbar, dass die Dämpfungscharakteristik in Abhängigkeit einer oder mehrerer Indikatoren, die hinsichtlich der Entstehung bzw. Vermeidung von Nick-, Roll- und/oder Gierbewegungen am landwirtschaftlichen Traktor von Bedeutung sind, angepasst wird. Zu diesen Indikatoren gehören insbesondere
- eine Hubhöhe des Dreipunkt-Krafthebers,
- eine Ausfahrlänge und/oder ein Anstellwinkel eines hydraulischen Oberlenkers des Dreipunkt-Krafthebers,
- ein fahrtbezogener Betriebszustand des landwirtschaftlichen Traktors,
- eine Masse und/oder Schwerpunktlage des landwirtschaftlichen Traktors bzw. Anbaugeräts,
- eine auf die erste und/oder zweite Stellanordnung wirkende Last,
- die zeitliche Änderung einer Verfahrgeschwindigkeit von zum Heben und Senken des Dreipunkt-Krafthebers vorgesehenen hydraulischen Hubzylindern,
- eine Dämpfungs- und/oder Federungscharakteristik einer an dem landwirtschaftlichen Traktor vorgesehenen Radfederung, und/oder
- eine an dem landwirtschaftlichen Traktor bzw. Anbaugerät auftretende Kinematik.

Die jeweilige Hubhöhe des Dreipunkt-Krafthebers und damit die Vertikalstellung der Unterlenker ist vor allem für die Bemessung des gegenüber heckseitigen Traktorreifen zur Verfügung stehenden Seitenfreiraums von Belang, wobei letzterer mit der Hubhöhe zunehmend geringer wird. Um einen unerwünschten Kontakt zwischen den Unterlenkern und den heckseitigen Traktorreifen zu unterbinden, wird mittels der ersten Stellanordnung eine Anpassung der Dämpfungskraft nach Maßgabe der Hubhöhe des Dreipunkt-Krafthebers abhängig von der aktuellen Seitenauslenkung der Unterlenker derart vorgenommen, dass diese zur Schaffung eines virtuellen Anschlags (progressiv) bis hin zur Blockierung der ersten Stellanordnung angehoben wird.

Des Weiteren hat die Ausfahrlänge und/oder der Anstellwinkel des hydraulischen Oberlenkers unmittelbaren Einfluss auf die Stellung des Anbaugeräts und damit auf die Lage des Schwerpunkts gegenüber dem landwirtschaftlichen Traktor. Je höher der Schwerpunkt liegt, umso größer ist die Neigung des landwirtschaftlichen Traktors zu unerwünschten Nick-, Roll- und/oder Gierbewegungen. Letztere treten vor allem beim Ausführen von Wendemanövern auf und erfordern eine angemessene Einschränkung des Horizontalfreiheitsgrads durch Erhöhung der Dämpfungskraft der ersten Stellanordnung. Ähnliche Situationen können sich beim einseitigen Durchfahren eines Schlaglochs sowie damit einhergehenden Roll- bzw. Wankanregungen ergeben. Hier wird in entsprechender Weise eine Einschränkung des Vertikalfreiheitsgrads durch Erhöhung der Dämpfungskraft der zweiten Stellanordnung vorgenommen. Diese kann insbesondere seitenindividuell für die beiden Unterlenker getrennt erfolgen, wobei jedem der beiden Unterlenker eine eigene Stellanordnung zugeordnet ist.

Generell ist es von Vorteil, wenn die Masse und/oder Schwerpunktlage des landwirtschaftlichen Traktors bzw. Anbaugeräts zum Zwecke der exakten Anpassung der Dämpfungscharakteristik einbezogen wird, wobei die entsprechenden Werte letztlich vom Typ bzw. Modell des landwirtschaftlichen Traktors bzw. Anbaugeräts abhängen. Die zugehörigen Angaben können in einer Gerätedatenbank abgelegt und von dort abgerufen werden. Alternativ ist auch eine manuelle Auswahl bzw. Eingabe über ein Bedienerterminal des landwirtschaftlichen Traktors vorstellbar. Bei Anbaugeräten variabler Zuladung bzw. Masse (beispielsweise bei einer von dem Dreipunkt-Kraftheber getragenen Reihensäeinheit oder dergleichen) ist auch der Einsatz einer sogenannten Kraftheberwaage, wie sie aus der DE 10 2016 207 200 A1 hervorgeht, möglich.

Daneben beeinflusst der fahrtbezogene Betriebszustand des landwirtschaftlichen Traktors Art und Umfang des Schwingungseintrags. Dieser ist naturgemäß beim Befahren eines unebenen Geländes größer als im Falle einer Transportfahrt auf einer gut befestigten Straße. Auch sind zusätzliche Einflüsse wie die gleichzeitige Ausführung eines Wendevorgangs auf einem Feld oder dessen Bodenbeschaffenheit bzw. -nachgiebigkeit von Belang. Der momentane Betriebszustand kann aus kartografischen Daten durch Abgleich mit seitens eines GPS-Systems bereitgestellten Positionsinformationen, insbesondere in Verbindung mit sensorisch bereitgestellten Lenk- und Geschwindigkeitsinformationen, abgeleitet werden. Letztere stammen beispielsweise von einer autonomen Fahrzeugsteuerung des landwirtschaftlichen Traktors. Zur Beurteilung des momentanen Betriebszustands des landwirtschaftlichen Traktors ist jedoch auch die Verwendung eines Verfahrens zur Analyse und/oder Dokumentation des Betriebs eines Arbeitsfahrzeugs gemäß DE 10 2013 221 757 A1 oder eines Verfahrens zur Erkennung und Charakterisierung von Wendemanövern eines Arbeitsfahrzeugs gemäß DE 10 2014 202 181 A1 denkbar.

Grundsätzlich besteht auch die Möglichkeit, die Kinematik des landwirtschaftlichen Traktors bzw. Anbaugeräts zu berücksichtigen, mithin also eine unmittelbare sensorische Erfassung auftretender Nick-, Roll- und Gierbewegungen vorzunehmen und der Anpassung der Dämpfungscharakteristik zugrunde zu legen.

Auch kann die auf die erste und/oder zweite Stellanordnung wirkende Last herangezogen werden, um die Masse des am Dreipunkt-Kraftheber eingehängten Anbaugeräts zumindest ungefähr abzuschätzen. Die zu diesem Zweck einzubeziehende Geometrie des Dreipunkt-Krafthebers bzw. die Schwerpunktlage des jeweiligen Anbaugeräts wird dabei als bekannt vorausgesetzt. Angaben bezüglich der Schwerpunktlage des Anbaugeräts sind beispielsweise in der Gerätedatenbank abgelegt und stehen dort zur Verfügung.

Am Anbaugerät beim Verstellen des Dreipunkt-Krafthebers ausgeführte beschleunigte Bewegungen können ebenfalls zu einem entsprechenden Schwingungseintrag führen. Diesem Umstand kann unter anderem durch Berücksichtigung der zeitlichen Änderung der Verfahrgeschwindigkeit von zum Heben und Senken des Dreipunkt-Krafthebers vorgesehenen hydraulischen Hubzylindern Rechnung getragen werden.

Sollte der landwirtschaftliche Traktor mit einer Radfederung, zum Beispiel in Form einer gefederten Vorderachse, ausgestattet sein, so nimmt diese ihrerseits Einfluss auf das Bewegungsverhalten des landwirtschaftlichen Traktors. Es ist daher von Vorteil, wenn die Dämpfungs- und/oder Federungscharakteristik der an dem landwirtschaftlichen Traktor vorgesehenen Radfederung bei der Anpassung der Dämpfungscharakteristik der ersten und/oder zweiten Stellanordnung in geeigneter Weise berücksichtigt wird.

Zur Unterdrückung seitwärts gerichteter Schwingungs- bzw. Bewegungsanteile kann der Horizontalfreiheitsgrad durch Veränderung der Dämpfungscharakteristik eines von der ersten Stellanordnung umfassten hydraulischen Seitenstabilisators, der zwischen wenigstens einem der Unterlenker und einer traktorseitigen Befestigungsstelle verläuft, angepasst werden. Ist dieser einfachwirkend ausgebildet, so ist jedem der beiden Unterlenker ein eigener Seitenstabilisator zuzuordnen, um die erforderliche Seitenführung zu gewährleisten. Im Falle einer doppeltwirkenden Ausbildung hingegen genügt ein einzelner Seitenstabilisator, da bei eingehängtem Anbaugerät eine Zwangskopplung zwischen den Unterlenkern hergestellt ist.

Des Weiteren kann die zweite Stellanordnung doppeltwirkende hydraulische Hubstreben umfassen, die zum seitenindividuellen Heben und Senken der Unterlenker an hydraulisch verschwenkbaren Hubarmen des Dreipunkt-Krafthebers angelenkt sind, wobei zur Unterdrückung auf- bzw. abwärtsgerichteter Schwingungs- bzw. Bewegungsanteile der Vertikalfreiheitsgrad durch Veränderung der Dämpfungscharakteristik der hydraulischen Hubstreben angepasst wird. Die doppeltwirkende Ausbildung der hydraulischen Hubstreben gewährleistet eine kippstabile Führung des Anbaugeräts im Falle von um die Längsachse des landwirtschaftlichen Traktors auftretenden Roll- bzw. Wankbewegungen. Jede der Hubstreben umfasst einen doppeltwirkenden Hydraulikzylinder, an dessen Enden Befestigungsstellen zur Anbringung an einem der Hubarme bzw. Unterlenker vorgesehen sind.

Zusätzlich oder alternativ kann die zweite Stellanordnung doppeltwirkende hydraulische Hubzylinder umfassen, die zum seitenindividuellen Heben und Senken der Unterlenker vorgesehen sind, wobei zur Unterdrückung auf- bzw. abwärtsgerichteter Schwingungs- bzw. Bewegungsanteile der Vertikalfreiheitsgrad durch Veränderung der Dämpfungscharakteristik der doppeltwirkenden hydraulischen Hubzylinder angepasst wird. Im Gegensatz zu herkömmlichen Dreipunkt-Krafthebern sind die beiden Hubarme getrennt am landwirtschaftlichen Traktor angelenkt, sodass diese mittels der hydraulischen Hubzylinder in unterschiedlichem Umfang wie auch in voneinander abweichenden Richtungen verschwenkt werden können. Dies erlaubt eine gezielte Unterdrückung von um die Längsachse des landwirtschaftlichen Traktors auftretenden Roll- bzw. Wankbewegungen. Eine gleichlaufende Verschwenkbewegung der Hubarme kann hierbei durch hydraulische Kopplung der hydraulischen Hubzylinder erzielt werden.

Zur Veränderung der Dämpfungscharakteristik ist erfindungsgemäß ein Offnungsquerschnitt einer zwischen einem hydraulischen Blasenspeicher und einer hydraulischen Arbeitskammer der ersten und/oder zweiten Stellanordnung angeordneten Drossel oder Blende verstellt werden. Die Dämpfungskraft des aus hydraulischer Arbeitskammer und Blasenspeicher gebildeten Feder-Dämpfer-Systems ist dabei umso größer, je kleiner der Öffnungsquerschnitt der Drossel bzw. Blende ist. Durch vollständiges Schließen der Drossel bzw. Blende kann die erste und/oder zweite Stellanordnung bis in einen Zustand vollständiger Blockierung versetzt werden. Der Blasenspeicher kann hierbei baulich in die jeweilige Stellanordnung integriert sein. Zur Kostenreduzierung ist es vorstellbar, dass die Drossel bzw. Blende bezüglich ihres Öffnungsquerschnitts ausschließlich von Hand verstellt werden kann. Sollten derartige Restriktionen nicht bestehen, wird eine elektrische Verstellung bevorzugt.

Vorzugsweise wird beim Verstellen des Öffnungsquerschnitts eine sensorisch erfasste Temperatur eines durch die Drossel bzw. Blende hindurchtretenden Hydraulikölstroms berücksichtigt. So nimmt die Viskosität des Hydrauliköls und damit der Strömungswiderstand innerhalb der Drossel bzw. Blende mit steigender Temperatur ab, was eine entsprechende Korrektur des Öffnungsquerschnitts erforderlich macht, um eine gewünschte Dämpfungscharakteristik beizubehalten.

Auch besteht die Möglichkeit, dass der Betätigungszustand eines zur Druckbeaufschlagung der hydraulischen Arbeitskammer der ersten und/oder zweiten Stellanordnung vorgesehenen Steuerventils berücksichtigt wird. Dies kann aus Gründen der Priorisierung des Energie- bzw. Hydraulikölverbrauchs innerhalb eines geschlossenen Hydraulikkreislaufs des landwirtschaftlichen Traktors mit begrenzter Hydraulikölkapazität derart erfolgen, dass bei Erkennung eines sich aus dem Betätigungszustand des Steuerventils ergebenden Verstellvorgangs am Dreipunkt-Kraftheber eine Anpassung der Dämpfungscharakteristik mittels der ersten und/oder zweiten Stellanordnung zunächst solange zurückgestellt wird, bis der Verstellvorgang abgeschlossen ist und das Anbaugerät seine endgültige Position eingenommen hat.

Zusätzlich kann die erste und/oder zweite Stellanordnung bei Auftreten einer unterhalb einer vorgegebenen Grenzfrequenz liegenden Schwingung derart angesteuert werden, dass dieser eine gegenphasige Kompensationsbewegung tilgend entgegengesetzt wird. Die Grenzfrequenz liegt hier typischerweise in der Größenordnung von einigen Hertz und hängt letztlich von der Reaktionsträgheit der verwendeten ersten und/oder zweiten Stellanordnung sowie der von diesen zu bewegenden Masse ab. Letztere ergibt sich aus der Masse der bewegten Komponenten des Dreipunkt-Krafthebers (insbesondere den Unterlenkern und dem Oberlenker) sowie dem daran eingehängten Anbaugerät. Die erste und/oder zweite Stellanordnung wird in diesem Fall als aktives Tilgerelement eingesetzt, höherfrequente Schwingungen jenseits der vorgegebenen Grenzfrequenz unterliegen hingegen der vorstehend beschriebenen semiaktiven Dämpfung durch geeignete Anpassung der Dämpfungscharakteristik.

Das erfindungsgemäße Verfahren wird im Folgenden anhand der beigefügten Zeichnungen näher erläutert. Es zeigen:
- Fig. 1: eine Fahrzeugumgebung, innerhalb derer das erfindungsgemäße Verfahren ausgeführt wird, und
- Fig. 2: ein das erfindungsgemäße Verfahren veranschaulichendes Flussdiagramm.

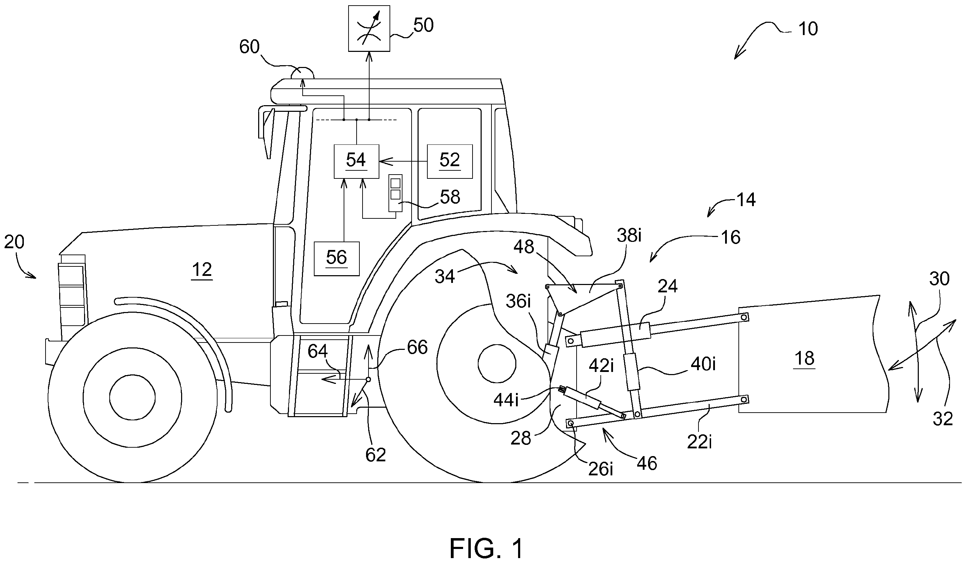

Fig. 1 zeigt eine Fahrzeugumgebung, innerhalb derer das erfindungsgemäße Verfahren ausgeführt wird.

In der Sichtebene von Fig. 1 hintereinander liegende Komponenten gleicher Bauart tragen hierbei den Index i, wobei jeweils eine rechte (i = r) und eine linke (i = l) Komponente vorhanden ist. Aus Gründen der Darstellung ist lediglich die linke Komponente sichtbar, die rechte Komponente ist von dieser verdeckt.

Bei der in Fig. 1 schematisch dargestellten Fahrzeugumgebung 10 handelt es sich um einen landwirtschaftlichen Traktor 12 mit einem in einem Heckbereich 14 vorgesehenen Dreipunkt-Kraftheber 16, an dem ein Anbaugerät 18 angebracht ist, beispielsweise ein Pflug, ein Grubber, eine Reihensäeinheit, ein Spritzgestänge, oder dergleichen. Die Darstellung des Dreipunkt-Krafthebers 16 im Heckbereich 14 hat lediglich beispielhaften Charakter, dieser kann sich ebenso gut auch in einem Frontbereich 20 des landwirtschaftlichen Traktors 12 befinden.

Der Dreipunkt-Kraftheber 16 ist von konventioneller Bauart und weist neben linken und rechten Unterlenkern 22i einen hydraulischen Oberlenker 24 auf. Die Unterlenker 22i lassen sich vertikal zum Heben und Senken des Anbaugeräts 18 sowie eingeschränkt auch horizontal und damit seitwärts verschwenken, was durch (in Fig. 1 nicht dargestellte) Kugelgelenke im Bereich zugehöriger Anlenkstellen 26i am Differentialgehäuse 28 des landwirtschaftlichen Traktors 12 ermöglicht wird. Mit anderen Worten weisen die Unterlenker 22i einen Vertikalfreiheitsgrad 30 sowie einen Horizontalfreiheitsgrad 32 auf. Entsprechendes gilt für die traktorseitige Anlenkung des ebenfalls am Anbaugerät 18 eingehängten Oberlenkers 24, der den vorgenannten Schwenkbewegungen insoweit folgt.

Des Weiteren ist ein Hubwerk 34 mit hydraulischen Hubzylindern 36i zum Heben und Senken des Dreipunkt-Krafthebers 16 vorhanden. Genauer gesagt dienen die hydraulischen Hubzylinder 36i dem Verschwenken zugehöriger Hubarme 38i, an denen wiederum die Unterlenker 22i über zwischenliegende hydraulische Hubstreben 40i angelenkt sind.

Die hydraulischen Hubstreben 40i sind doppeltwirkend ausgebildet und erlauben ein seitenindividuelles Heben und Senken der Unterlenker 22i, wobei zur Unterdrückung von an den Unterlenkern 22i auftretenden auf- bzw. abwärtsgerichteten Schwingungs- bzw. Bewegungsanteilen der Vertikalfreiheitsgrad 30 durch Veränderung der Dämpfungscharakteristik der hydraulischen Hubstreben 40i angepasst werden kann. Im Falle der Verwendung mechanischer Hubstreben ohne hydraulische Verstellmöglichkeit wird diese Funktion mittels der beiden hydraulischen Hubzylinder 36i verwirklicht, wozu die beiden Hubarme 38i - entgegen dem Aufbau herkömmlicher Dreipunkt-Kraftheber - getrennt am landwirtschaftlichen Traktor 12 angelenkt sind, sodass die beiden Unterlenker 22i mittels der hydraulischen Hubzylinder 36i in unterschiedlichem Umfang wie auch in voneinander abweichenden Richtungen verschwenkt werden können. Die hydraulischen Hubzylinder 36i sind doppeltwirkend ausgebildet, sodass eine kippstabile Führung des Anbaugeräts 18 gewährleistet ist.

Darüber hinaus kann zur Unterdrückung seitwärts gerichteter Schwingungs- bzw. Bewegungsanteile der Horizontalfreiheitsgrad 32 durch Veränderung der Dämpfungscharakteristik hydraulischer Seitenstabilisatoren 42i, die jeweils zwischen einem der Unterlenker 22i und einer traktorseitigen Befestigungsstelle 44i verlaufen, angepasst werden. Die Seitenstabilisatoren 42i sind vorliegend einfachwirkend ausgebildet, sodass jedem der beiden Unterlenker 22i ein eigener Seitenstabilisator zugeordnet ist. Im Falle einer doppeltwirkenden Ausbildung hingegen genügt ein einzelner Seitenstabilisator, da bei eingehängten Anbaugerät 18 eine Zwangskopplung zwischen den Unterlenkern 22i hergestellt ist.

Allgemein gesprochen sind die hydraulischen Seitenstabilisatoren 42i Bestandteil einer ersten Stellanordnung 46 zur Anpassung des Horizontalfreiheitsgrads 32 der Unterlenker 22i, während die hydraulischen Hubstreben 40i bzw. hydraulischen Hubzylinder 36i Bestandteil einer zweiten Stellanordnung 48 zur Anpassung des Vertikalfreiheitsgrads 30 der Unterlenker 22i sind.

Die Veränderung der Dämpfungscharakteristik erfolgt mittels einer elektrischen Betätigungseinrichtung 50 durch Verstellen eines Öffnungsquerschnitts wenigstens einer zwischen einem jeweiligen hydraulischen Blasenspeicher und einer jeweiligen hydraulischen Arbeitskammer der ersten und/oder zweiten Stellanordnung 46, 48 angeordneten Drossel bzw. Blende. Die Dämpfungskraft des aus hydraulischer Arbeitskammer und Blasenspeicher gebildeten Feder-Dämpfer-Systems ist dabei umso größer, je kleiner der Öffnungsquerschnitt der Drossel bzw. Blende ist. Durch vollständiges Schließen der Drossel bzw. Blende mittels der Betätigungseinrichtung 50 kann die erste und/oder zweite Stellanordnung 46, 48 bis in einen Zustand vollständiger Blockierung versetzt werden.

Eine Anordnung 52 nicht im einzelnen dargestellter Sensoren bzw. Zustandsbeobachter dient der Erfassung bzw. Beurteilung diverser Zustandsgrößen der in Fig. 1 dargestellten Fahrzeugumgebung 10, wobei die entsprechenden Informationen einer mikroprozessorgesteuerten Kontrolleinheit 54 zugeführt werden. Diese kommuniziert zusätzlich mit einer Gerätedatenbank 56, einem Bedienerterminal 58 sowie einem GPS-System 60 des landwirtschaftlichen Traktors 12. Die Gerätedatenbank 56 kann auch als zentraler (beabstandeter) Server ausgebildet sein, wobei die Kontrolleinheit 54 mit dieser über eine entsprechende Kommunikationseinrichtung, beispielsweise in Gestalt eines Mobilfunkgeräts, in Kontakt steht.

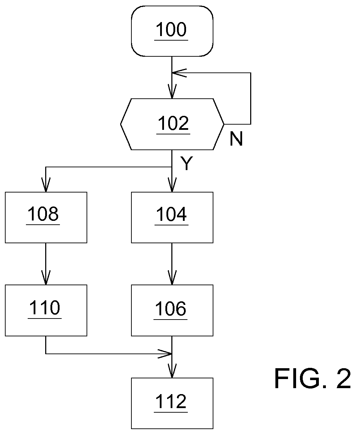

Fig. 2 zeigt eine mögliche Ausführung des erfindungsgemäßen Verfahrens zur Tilgung eines fahrtbedingten Schwingungseintrags seitens des an dem Dreipunkt-Kraftheber 16 des landwirtschaftlichen Traktors 12 angebrachten Anbaugeräts 18.

Das von der Kontrolleinheit 54 ausgeführte Verfahren wird in einem Initialisierungsschritt 100 gestartet, mit dem Ziel, durch Veränderung der Dämpfungscharakteristik der ersten Stellanordnung 46 den Horizontalfreiheitsgrad 32 und durch Veränderung der Dämpfungscharakteristik der zweiten Stellanordnung 48 den Vertikalfreiheitsgrad 30 der beiden Unterlenker 22i des Dreipunkt-Krafthebers 16 derart anzupassen, dass an dem landwirtschaftlichen Traktor 12 und/oder Anbaugerät 18 auftretende Gier-, Nick-, und/oder Rollbewegungen zumindest teilweise kompensiert werden.

Definitionsgemäß bezieht sich eine Nickbewegung auf eine Drehung um eine Querachse 62, eine Roll- bzw. Wankbewegung auf eine Drehung um eine Längsachse 64 und eine Gierbewegung auf eine Drehung um eine Hochachse 66 des landwirtschaftlichen Traktors 12. Die Achsen 62, 64 und 66 verlaufen hierbei durch den sich aus der Kombination von landwirtschaftlichem Traktor 12 und Anbaugerät 18 ergebenden Gesamtschwerpunkt.

Auf den Initialisierungsschritt 100 folgt ein erster Hauptschritt 102, in dem geprüft wird, ob sich das Anbaugerät 18 in einer angehobenen Transportstellung befindet. Trifft dies zu, wird mit einem zweiten Hauptschritt 104 fortgefahren, andernfalls kehrt das Verfahren zum Anfang zurück.

Im zweiten Hauptschritt 104 ermittelt die Kontrolleinheit 54 den Umfang einer gegebenenfalls vorzunehmenden Anpassung der Dämpfungscharakteristik der ersten und/oder zweiten Stellanordnung 46, 48. Zu diesem Zweck werden von der Kontrolleinheit 54 aus den von der Anordnung 52 bereitgestellten Zustandsgrößen abgeleitete Indikatoren herangezogen, die hinsichtlich der Entstehung bzw. Vermeidung von Nick-, Roll- und/oder Gierbewegungen am landwirtschaftlichen Traktor 12 von Bedeutung sind. Zu diesen Indikatoren gehören
- eine Hubhöhe des Dreipunkt-Krafthebers 16,
- eine Ausfahrlänge und/oder ein Anstellwinkel des hydraulischen Oberlenkers 24 des Dreipunkt-Krafthebers 16,
- ein fahrtbezogener Betriebszustand des landwirtschaftlichen Traktors 12,
- eine Masse und/oder Schwerpunktlage des landwirtschaftlichen Traktors 12 bzw. Anbaugeräts 18,
- eine auf die erste und/oder zweite Stellanordnung 46, 48 wirkende Last,
- die zeitliche Änderung einer Verfahrgeschwindigkeit der zum Heben und Senken des Dreipunkt-Krafthebers 16 vorgesehenen hydraulischen Hubzylinder 36i,
- eine Dämpfungs- und/oder Federungscharakteristik einer an dem landwirtschaftlichen Traktor 12 vorgesehenen Radfederung, und/oder
- eine an dem landwirtschaftlichen Traktor 12 bzw. Anbaugerät 18 auftretende Kinematik.

Die jeweilige Hubhöhe des Dreipunkt-Krafthebers 16 und damit die Vertikalstellung der Unterlenker 22i ist vor allem für die Bemessung des gegenüber heckseitigen Traktorreifen zur Verfügung stehenden Seitenfreiraums von Belang, wobei letzterer mit der Hubhöhe zunehmend geringer wird. Um einen unerwünschten Kontakt zwischen den Unterlenkern 22i und den heckseitigen Traktorreifen zu unterbinden, ist mittels der ersten Stellanordnung 46 eine Anpassung der Dämpfungskraft nach Maßgabe der Hubhöhe des Dreipunkt-Krafthebers 16 abhängig von der aktuellen Seitenauslenkung der Unterlenker 22i derart vorzunehmen, dass diese zur Schaffung eines virtuellen Anschlags (progressiv) bis hin zur Blockierung der ersten Stellanordnung 46 angehoben wird.

Des Weiteren hat die Ausfahrlänge und/oder der Anstellwinkel des hydraulischen Oberlenkers 24 unmittelbaren Einfluss auf die Stellung des Anbaugeräts 18 und damit auf die Lage des Schwerpunkts gegenüber dem landwirtschaftlichen Traktor 12. Je höher der Schwerpunkt liegt, umso größer ist die Neigung des landwirtschaftlichen Traktors 12 zu unerwünschten Nick-, Roll- und/oder Gierbewegungen. Letztere treten vor allem beim Ausführen von Wendemanövern auf und erfordern eine angemessene Einschränkung des Horizontalfreiheitsgrads 32 durch Erhöhung der Dämpfungskraft der ersten Stellanordnung 46. Ähnliche Situationen können sich beim einseitigen Durchfahren eines Schlaglochs sowie damit einhergehenden Roll- bzw. Wankanregungen ergeben. Hier ist in entsprechender Weise eine Einschränkung des Vertikalfreiheitsgrads 30 durch Erhöhung der Dämpfungskraft der zweiten Stellanordnung 48 vorzunehmen. Diese erfolgt seitenindividuell für die beiden Unterlenker 22i getrennt.

Ergänzend wird die Masse und/oder Schwerpunktlage des landwirtschaftlichen Traktors 12 bzw. Anbaugeräts 18 von der Kontrolleinheit 54 zum Zwecke der exakten Anpassung der Dämpfungscharakteristik einbezogen, wobei die entsprechenden Werte letztlich vom Typ bzw. Modell des landwirtschaftlichen Traktors 12 bzw. Anbaugeräts 18 abhängen. Die zugehörigen Angaben sind in der Gerätedatenbank 56 abgelegt und werden von dort seitens der Kontrolleinheit 54 abgerufen. Alternativ erfolgt eine manuelle Auswahl bzw. Eingabe über das Bedienerterminal 58 des landwirtschaftlichen Traktors 12. Bei Anbaugeräten variabler Zuladung bzw. Masse (beispielsweise bei einer von dem Dreipunkt-Kraftheber 16 getragenen Reihensäeinheit oder dergleichen) bietet sich zudem der Einsatz einer sogenannten Kraftheberwaage, wie sie aus der DE 10 2016 207 200 A1 hervorgeht, an.

Der fahrtbezogene Betriebszustand des landwirtschaftlichen Traktors 12 beeinflusst Art und Umfang des Schwingungseintrags. Dieser ist naturgemäß beim Befahren eines unebenen Geländes größer als im Falle einer Transportfahrt auf einer gut befestigten Straße. Auch sind zusätzliche Einflüsse wie die gleichzeitige Ausführung eines Wendevorgangs auf einem Feld oder dessen Bodenbeschaffenheit bzw. -nachgiebigkeit von Belang. Der momentane Betriebszustand wird von der Kontrolleinheit 54 aus kartografischen Daten durch Abgleich mit seitens des GPS-Systems 60 bereitgestellten Positionsinformationen, insbesondere in Verbindung mit sensorisch bereitgestellten Lenk- und Geschwindigkeitsinformationen, abgeleitet. Letztere stammen beispielsweise von einer in Fig. 1 nicht dargestellten autonomen Fahrzeugsteuerung des landwirtschaftlichen Traktors 12.

Die Kontrolleinheit 54 berücksichtigt bei der Anpassung der Dämpfungscharakteristik zudem die Kinematik des landwirtschaftlichen Traktors 12 bzw. Anbaugeräts 18, was durch unmittelbare sensorische Erfassung auftretender Nick-, Roll- und Gierbewegungen mittels der Anordnung 52 erfolgt.

Die auf die erste und/oder zweite Stellanordnung 46, 48 wirkende Last wird von der Kontrolleinheit 54 herangezogen, um die Masse des am Dreipunkt-Kraftheber 16 eingehängten Anbaugeräts 18 zumindest ungefähr abzuschätzen. Die zu diesem Zweck einzubeziehende Geometrie des Dreipunkt-Krafthebers 16 bzw. die Schwerpunktlage des jeweiligen Anbaugeräts 18 wird dabei als bekannt vorausgesetzt. Angaben bezüglich der Schwerpunktlage des Anbaugeräts 18 sind beispielsweise in der Gerätedatenbank 56 abgelegt und stehen dort der Kontrolleinheit 54 zur Verfügung.

Am Anbaugerät 18 beim Verstellen des Dreipunkt-Krafthebers 16 ausgeführte beschleunigte Bewegungen können ebenfalls zu einem entsprechenden Schwingungseintrag führen. Diesem Umstand wird von der Kontrolleinheit 54 unter anderem durch Berücksichtigung der zeitlichen Änderung der Verfahrgeschwindigkeit der zum Heben und Senken des Dreipunkt-Krafthebers 16 vorgesehenen hydraulischen Hubzylinder 36i Rechnung getragen.

Eine Radfederung, zum Beispiel in Form einer gefederten Vorderachse, nimmt ihrerseits Einfluss auf das Bewegungsverhalten des landwirtschaftlichen Traktors 12. Die Kontrolleinheit 54 berücksichtigt daher in geeigneter Weise die Dämpfungs- und/oder Federungscharakteristik der Radfedereinrichtung bei der Anpassung der Dämpfungscharakteristik der ersten und/oder zweiten Stellanordnung 46, 48.

Ausgehend von der im zweiten Hauptschritt 104 durchgeführten Bewertung berechnet die Kontrolleinheit 54 in einem dritten Hauptschritt 106 einen zur Erzielung der gewünschten Dämpfungscharakteristik an der jeweiligen Drossel bzw. Blende mittels der Betätigungseinrichtung 50 einzustellenden Öffnungsquerschnitt. Hierbei wird von der Kontrolleinheit 54 eine mittels der Anordnung 52 sensorisch erfasste Temperatur eines durch die Drossel bzw. Blende hindurchtretenden Hydraulikölstroms berücksichtigt. So nimmt die Viskosität des Hydrauliköls und damit der Strömungswiderstand innerhalb der Drossel bzw. Blende mit steigender Temperatur ab, was eine entsprechende Korrektur des Öffnungsquerschnitts erforderlich macht, um eine gewünschte Dämpfungscharakteristik beizubehalten. Der an der betreffenden Blende bzw. Drossel einzustellende Öffnungsquerschnitt wird der Betätigungseinrichtung 50 in Form einer entsprechenden Steuergröße mitgeteilt.

Hierbei wird von der Kontrolleinheit 54 der Betätigungszustand eines zur Druckbeaufschlagung der jeweiligen hydraulischen Arbeitskammer der ersten und/oder zweiten Stellanordnung 46, 48 vorgesehenen (in Fig. 1 nicht dargestellten) Steuerventils berücksichtigt. Dies kann aus Gründen der Priorisierung des Energie- bzw. Hydraulikölverbrauchs innerhalb eines geschlossenen Hydraulikkreislaufs des landwirtschaftlichen Traktors 12 mit begrenzter Hydraulikölkapazität derart erfolgen, dass bei Erkennung eines sich aus dem Betätigungszustand des Steuerventils ergebenden Verstellvorgangs am Dreipunkt-Kraftheber 16 eine Anpassung der Dämpfungscharakteristik mittels der ersten und/oder zweiten Stellanordnung 46, 48 zunächst solange zurückgestellt wird, bis der Verstellvorgang abgeschlossen ist und das Anbaugerät 18 seine endgültige Position eingenommen hat.

Optional weist das Verfahren einen parallel ablaufenden Nebenzweig auf, in dem die Kontrolleinheit 54 in einem vom Durchlaufen des ersten Hauptschritts 102 abhängigen ersten Nebenschritt 108 das Frequenzspektrum eines am landwirtschaftlichen Traktor 12 auftretenden Schwingungseintrags bewertet, was durch Analyse von mittels der Anordnung 52 sensorisch erfasster Beschleunigungsinformationen erfolgt. Hierbei wird die erste und/oder zweite Stellanordnung 46, 48 bei Auftreten einer unterhalb einer vorgegebenen Grenzfrequenz liegenden Schwingung in einem zweiten Nebenschritt 110 derart angesteuert, dass dieser eine gegenphasige Kompensationsbewegung tilgend entgegengesetzt wird. Die Grenzfrequenz liegt hier typischerweise in der Größenordnung von einigen Hertz und hängt letztlich von der Reaktionsträgheit der verwendeten ersten und/oder zweiten Stellanordnung 46, 48 sowie der von diesen zu bewegenden Masse ab. Letztere ergibt sich aus der Masse der bewegten Komponenten des Dreipunkt-Krafthebers 16 (insbesondere den Unterlenkern 22i und dem Oberlenker 24) sowie dem daran eingehängten Anbaugerät 18. Die erste und/oder zweite Stellanordnung 46, 48 wird in diesem Fall als aktives Tilgerelement eingesetzt, höherfrequente Schwingungen jenseits der vorgegebenen Grenzfrequenz unterliegen hingegen der vorstehend beschriebenen semiaktiven Dämpfung durch geeignete Anpassung der Dämpfungscharakteristik.

Anschließend wird das Verfahren in einem gemeinsamen Schlussschritt 112 beendet.

## Patentansprüche

1. Verfahren zur Tilgung eines fahrtbedingten Schwingungseintrags seitens eines Anbaugeräts (18), das an einem Dreipunkt-Kraftheber (16) eines landwirtschaftlichen Traktors (12) angebracht ist, wobei durch Veränderung der Dämpfungscharakteristik einer ersten Stellanordnung (46) ein Horizontalfreiheitsgrad (32) und durch Veränderung der Dämpfungscharakteristik einer zweiten Stellanordnung (48) ein Vertikalfreiheitsgrad (30) für rechte und linke Unterlenker (22r, 221) des Dreipunkt-Krafthebers (16) derart angepasst wird, dass an dem landwirtschaftlichen Traktor (12) und/oder Anbaugerät (18) auftretende Gier-, Nick- und/oder Rollbewegungen zumindest teilweise kompensiert werden, wobei zur Veränderung der Dämpfungscharakteristik ein Öffnungsquerschnitt einer zwischen einem hydraulischen Blasenspeicher und einer hydraulischen Arbeitskammer der ersten und/oder zweiten Stellanordnung (46, 48) angeordneten Drossel oder Blende verstellt wird.

2. Verfahren nach Anspruch 1, **dadurch gekennzeichnet, dass** der Horizontal- und/oder Vertikalfreiheitsgrad (32, 30) durch Veränderung der Dämpfungscharakteristik der ersten und/oder zweiten Stellanordnung (46, 48) nur dann angepasst wird, wenn festgestellt wird, dass sich das Anbaugerät (18) in einer angehobenen Transportstellung befindet.

3. verfahren nach Anspruch 1 oder 2, **dadurch gekennzeichnet, dass** die Dämpfungscharakteristik in Abhängigkeit einer oder mehrerer Indikatoren, die hinsichtlich der Entstehung bzw. Vermeidung von Nick-, Roll- und/oder Gierbewegungen am landwirtschaftlichen Traktor (12) von Bedeutung sind, angepasst wird.

4. Verfahren nach wenigstens einem der Ansprüche 1 bis 3, **dadurch gekennzeichnet, dass** zur Unterdrückung seitwärts gerichteter Schwingungs- bzw. Bewegungsanteile der Horizontalfreiheitsgrad (32) durch Veränderung der Dämpfungscharakteristik eines von der ersten Stellanordnung (46) umfassten hydraulischen Seitenstabilisators (42r, 421), der zwischen wenigstens einem der Unterlenker (22r, 221) und einer traktorseitigen Befestigungsstelle (44r, 441) verläuft, angepasst wird.

5. Verfahren nach wenigstens einem der Ansprüche 1 bis 4, **dadurch gekennzeichnet, dass** die zweite Stellanordnung (48) doppeltwirkende hydraulische Hubstreben (40r, 401) umfasst, die zum seitenindividuellen Heben und Senken der Unterlenker (22r, 221) an hydraulisch verschwenkbaren Hubarmen (38r, 381) des Dreipunkt-Krafthebers (16) angelenkt sind, wobei zur Unterdrückung auf- bzw. abwärtsgerichteter Schwingungs- bzw. Bewegungsanteile der Vertikalfreiheitsgrad (30) durch Veränderung der Dämpfungscharakteristik der hydraulischen Hubstreben (40r, 401) angepasst wird.

6. verfahren nach wenigstens einem der Ansprüche 1 bis 5, **dadurch gekennzeichnet, dass** die zweite Stellanordnung (48) doppeltwirkende hydraulische Hubzylinder (36r, 361) umfasst, die zum seitenindividuellen Heben und Senken der Unterlenker (22r, 221) vorgesehen sind, wobei zur Unterdrückung auf- bzw. abwärtsgerichteter Schwingungs- bzw. Bewegungsanteile der Vertikalfreiheitsgrad (30) durch Veränderung der Dämpfungscharakteristik der doppeltwirkenden hydraulischen Hubzylinder (36r, 361) angepasst wird.

7. Verfahren nach wenigstens einem der Ansprüche 1 bis 6, **dadurch gekennzeichnet, dass** beim Verstellen des Öffnungsquerschnitts eine sensorisch erfasste Temperatur eines durch die Drossel bzw. Blende hindurchtretenden Hydraulikölstroms berücksichtigt wird.

8. Verfahren nach wenigstens einem der Ansprüche 1 bis 7, **dadurch gekennzeichnet, dass** der Betätigungszustand eines zur Druckbeaufschlagung der hydraulischen Arbeitskammer der ersten und/oder zweiten Stellanordnung (46, 48) vorgesehenen Steuerventils berücksichtigt wird.

9. Verfahren nach wenigstens einem der Ansprüche 1 bis 8, **dadurch gekennzeichnet, dass** die erste und/oder zweite Stellanordnung (46, 48) bei Auftreten einer unterhalb einer vorgegebenen Grenzfrequenz liegenden Schwingung derart angesteuert wird, dass dieser eine gegenphasige Kompensationsbewegung tilgend entgegengesetzt wird.

## Claims

1. Method for damping travel-induced vibration input by an attachment (18) which has been attached to an agricultural tractor (12) at a three-point power lift (16), wherein, by changing the damping characteristic of a first actuator arrangement (46), a horizontal degree of freedom (32), and, by changing the damping characteristic of a second actuator arrangement (48), a vertical degree of freedom (30) for right-hand and lefthand lower links (22r, 221) of the three-point power lift (16) is adapted such that yawing, pitching and/or rolling movements that arise at the agricultural tractor (12) and/or attachment (18) are at least partially compensated, wherein, to change the damping characteristic, an opening cross section of a throttle or diaphragm arranged between a hydraulic bladder accumulator and a hydraulic working chamber of the first and/or second actuator arrangement (46, 48) is adjusted.

2. Method according to Claim 1, **characterized in that** the horizontal and/or vertical degree of freedom (32, 30) is adapted by changing the damping characteristic of the first and/or second actuator arrangement (46, 48) only when it is established that the attachment (18) is in a raised transport position.

3. Method according to Claim 1 or 2, **characterized in that** the damping characteristic is adapted depending on one or more indicators which are significant with regard to the occurrence or avoidance of pitching, rolling and/or yawing movements on the agricultural tractor (12).

4. Method according to at least one of Claims 1 to 3, **characterized in that**, to suppress laterally directed vibration or movement components, the horizontal degree of freedom (32) is adapted by changing the damping characteristic of a hydraulic side stabilizer (42r, 421) that is comprised by the first actuator arrangement (46) and extends between at least one of the lower links (22r, 221) and a tractor-side fastening point (44r, 441).

5. Method according to at least one of Claims 1 to 4, **characterized in that** the second actuator arrangement (48) comprises double-acting hydraulic lifting struts (40r, 401) which, for the side-specific lifting and lowering of the lower links (22r, 221), are articulated to hydraulically pivotable lifting arms (38r, 381) of the three-point power lift (16), wherein, to suppress upwardly or downwardly directed vibration or movement components, the vertical degree of freedom (30) is adapted by changing the damping characteristic of the hydraulic lifting struts (40r, 401).

6. Method according to at least one of Claims 1 to 5, **characterized in that** the second actuator arrangement (48) comprises double-acting hydraulic lifting cylinders (36r, 361) which are provided for the side-specific lifting and lowering of the lower links (22r, 221), wherein, to suppress upwardly or downwardly directed vibration or movement components, the vertical degree of freedom (30) is adapted by changing the damping characteristic of the double-acting hydraulic lifting cylinders (36r, 361).

7. Method according to at least one of Claims 1 to 6,k **characterized in that**, when adjusting the opening cross section, a sensor-captured temperature of a hydraulic oil stream passing through the throttle or diaphragm is taken into consideration.

8. Method according to at least one of Claims 1 to 7, **characterized in that** the actuation state of a control valve provided for pressurizing the hydraulic working chamber of the first and/or second actuator arrangement (46, 48) is taken into consideration.

9. Method according to at least one of Claims 1 to 8, **characterized in that**, when a vibration that lies below a predefined threshold frequency occurs, the first and/or second actuator arrangement (46, 48) is actuated such that it damps said vibration with a compensation movement in phase opposition.

## Revendications

1. Procédé d'amortissement d'un apport d'oscillation induit par la marche de la part d'un équipement auxiliaire (18), qui est monté sur un attelage trois points (16) d'un tracteur agricole (12) ; par modification de la caractéristique d'amortissement d'un premier agencement de réglage (46), un degré de liberté horizontal (32) et, par modification de la caractéristique d'amortissement d'un deuxième agencement de réglage (48), un degré de liberté vertical (30) pour des bras inférieurs droits et gauches (22r, 221) de l'attelage trois points (16) étant adapté de telle sorte que des mouvements de lacet, de tangage et/ou de roulis apparaissant sur le tracteur agricole (12) et/ou l'équipement auxiliaire (18) sont au moins partiellement compensés, une section transversale d'ouverture d'un étranglement ou d'un diaphragme agencé entre un accumulateur à vessie hydraulique et une chambre de travail hydraulique du premier et/ou du deuxième agencement de réglage (46, 48) étant réglée pour la modification de la caractéristique d'amortissement.

2. Procédé selon la revendication 1, **caractérisé en ce que** le degré de liberté horizontal et/ou vertical (32, 30) est adapté par modification de la caractéristique d'amortissement du premier et/ou du deuxième agencement de réglage (46, 48) uniquement lorsqu'il est constaté que l'équipement auxiliaire (18) se trouve dans une position de transport relevée.

3. Procédé selon la revendication 1 ou 2, **caractérisé en ce que** la caractéristique d'amortissement est adaptée en fonction d'un ou de plusieurs indicateurs qui sont importants au regard de l'apparition ou de l'évitement de mouvements de tangage, de roulis et/ou de lacet sur le tracteur agricole (12).

4. Procédé selon au moins l'une quelconque des revendications 1 à 3, **caractérisé en ce que**, pour supprimer des composantes d'oscillation ou de mouvement dirigées latéralement, le degré de liberté horizontal (32) est adapté par modification de la caractéristique d'amortissement d'un stabilisateur latéral hydraulique (42r, 421) compris par le premier agencement de réglage (46), qui s'étend entre au moins l'un des bras inférieurs (22r, 221) et un point de fixation côté tracteur (44r, 441).

5. Procédé selon au moins l'une quelconque des revendications 1 à 4, **caractérisé en ce que** le deuxième agencement de réglage (48) comprend des barres de levage hydrauliques à double effet (40r, 401), qui sont articulées sur des bras de levage (38r, 381) pivotants hydrauliquement de l'attelage à trois points (16) pour le levage et l'abaissement latéral individuel des bras inférieurs (22r, 221) ; pour supprimer des composantes d'oscillation ou de mouvement dirigées vers le haut ou vers le bas, le degré de liberté vertical (30) étant adapté par modification de la caractéristique d'amortissement des barres de levage hydrauliques (40r, 401) .

6. Procédé selon au moins l'une quelconque des revendications 1 à 5, **caractérisé en ce que** le deuxième agencement de réglage (48) comprend des vérins de levage hydrauliques à double effet (36r, 361), qui sont prévus pour le levage et l'abaissement latéral individuel des bras inférieurs (22r, 221) ; pour supprimer des composantes d'oscillation ou de mouvement dirigées vers le haut ou vers le bas, le degré de liberté vertical (30) étant adapté par modification de la caractéristique d'amortissement des vérins de levage hydrauliques à double effet (36r, 361).

7. Procédé selon au moins l'une quelconque des revendications 1 à 6, **caractérisé en ce que**, lors du réglage de la section transversale d'ouverture, une température, détectée par un capteur, d'un courant d'huile hydraulique traversant l'étranglement ou le diaphragme est prise en compte.

8. Procédé selon au moins l'une quelconque des revendications 1 à 7, **caractérisé en ce que** l'état d'actionnement d'une soupape de commande prévue pour la sollicitation en pression de la chambre de travail hydraulique du premier et/ou du deuxième agencement de réglage (46, 48) est pris en compte.

9. Procédé selon au moins l'une quelconque des revendications 1 à 8, **caractérisé en ce que** le premier et/ou le deuxième agencement de réglage (46, 48) est commandé lors de l'apparition d'une oscillation se trouvant en dessous d'une fréquence limite prédéfinie, de telle sorte qu'un mouvement de compensation en opposition de phase est opposé à celle-ci par amortissement.
